# EUROPEAN PATENT SPECIFICATION

(11) **EP 2 388 697 B1**
(45) Date of publication and mention of the grant of the patent: **01.04.2020**
(21) Application number: 11166527.9
(22) Date of filing: 18.05.2011
(51) Int. Cl.: G06F 9/445

(54) **SYSTEM AND METHOD FOR MANAGING CONFLICTS BETWEEN BUSINESS FUNCTIONS CONFIGURATIONS**
SYSTEM UND VERFAHREN ZUM MANAGEN VON KONFLIKTEN ZWISCHEN KONFIGURATIONEN VON BUSINESS FUNCTIONS
SYSTEME ET PROCEDE POUR GERER LES CONFLITS ENTRE CONFIGURATIONS DE FONCTIONS METIER

(30) Priority: 19.05.2010 US 783019
(43) Date of publication of application: 23.11.2011
(73) Proprietor: SAP SE, 69190 Walldorf (DE)
(72) Inventor: Humprecht, Hans-Christian, 69190, Walldorf (DE)
(74) Representative: Richardt Patentanwälte PartG mbB

(56) References cited:
- WO-A1-95/22219
- US-A1- 2006 026 586
- US-A1- 2006 200 590
- US-A1- 2007 005 745
- Kessler, Karl: "A New and Improved Approach to SAP Industry Solutions - How the Switch and Enhancement Framework Now Consolidates SAP Industry Solutions with the ERP Core", , July 2000 (2000-07), pages 1-7, XP002659949, Retrieved from the Internet: URL:http://sapinsider.wispubs.com/Article/ A-New-and-Improved-Approach-to-SAP-Industr y-Solutions-%E2%80%94-How-the-Switch-and-E nhancement-Framework-Now-Consolidates-SAP- Industry-Solutions-with-the-ERP-Core/4157 [retrieved on 2011-09-21]

## Description

### Background

Business entities require business software for performing an array of essential tasks. Communication, planning, inventory control, order processing, systems monitoring, and nearly every facet of a business' operations, A business entity often requires a software solution with features, interfaces, data management, and other aspects unique to that one specific company. Yet, core functions may be similar among the different unique solutions. These core functions may be provided to several, unique business entities, e.g., companies. In addition to needing to vary several initial deployments among a variety of customer-companies, these varied implementations may need constant updating, to evolve with the evolving business' needs.

Document "A New and Improved Approach to SAP Industry Solutions - How the Switch and Enhancement Framework Now Consolidates SAP Industry Solutions with the ERP Core" by Karl Kessler describes a framework residing in the ABAP stack of SAP NetWeaver 2004s that controls what development objects are active in a system using switches.

Published patent application US 2007/005745 A1 describes consistent and efficient management of program configuration by providing a cache shared by one or more programs that attaches configuration to business application.

Published patent application US 2006/026586 A1 describes techniques for configuring software comprising core and user selectable business functions, wherein a user can select business functions to be activated and wherein it is determined whether the selected business functions are valid. Switches enabling software elements corresponding to the selected functions are activated, if the user selection is determined to be valid.

Software developers may design and provide a set of software tools in a generic or universal form. These tools may be controlled by a set of customization data that is specific to each unique customer. Unlike the companies transactional data, which may include millions of data records or more, the configuration and customization data may represent a very small and rarely changing set of data. This data may modify, instantiate, activate, or otherwise implement the provided tools, in a customer specific manner. With the configuration data, customers may be able to modify every aspect of their software experience, including defining the user interfaces, what functions are available on the interfaces, and/or what fields are provided to the user.

The configuration data module of business software suits may also facilitate a software enhancement package strategy to simplify the way customers manage and deploy new software functionality. Customers may selectively implemen enhancement software functions (e.g., as included in the enhancement package) and activate the software upon business demand. As a result, customers may be able to isolate the impact of software updates from introducing/rolling out new functionality and bring new functionality online faster through shortened testing cycles.

The enhancement package model may deliver innovations through the enhancement packages approximately every 9 to 12 months. Customers would no longer have to plan for major releases every five years. They could choose to selectively implement the business functions or technical improvements that add the value that matters most to their business. Software developers may use enhancement packages to quickly and easily deliver business and industry-specific functionality, enterprise services, and other functions that help improve and simplify the use of existing software packages, through user interface and other end-to-end process improvements.

A software enhancement package may include a set of enhanced functionality that may be integrated into an existing software suite. Each enhancement package may contain new versions of existing software components and/or completely new functions. Each change to the functions in a system has the potential for customer disruption. In order to minimize disruption and increase customer acceptance, a switch framework may also be provided, including a switch status table . Using this framework, enhanced functions (e.g., those in the enhancement packages) may be delivered in an inactive form. Then, within the enhancement packages, customers may choose which software components should be updated in their systems depending on the new/extended functionality they want to use.

In enhancement package contexts, it may be the case that new functionality must be explicitly switched on to become active/visible in the system. A core unit of functionality within the system, and as described herein, may be referred to as a business function. The business function may also be the core unit within an enhancement package that can be activated/switched on. Activating a business function may trigger the associated switches, which may then influence the execution of the code enhancements. These switches may ensure that customers only see and make use of the new functionality if they have activated them. The activation process may also start a job (e.g., a batch-job or cron-job, etc.) in the particular example system that automatically performs all changes in that system.

Embodiments of the present invention concern further improvements in the enhancement package model. Currently, by virtue of the switch framework, delivery of enhancement packages do not cause disruption, and customers may select only those functions they want, limiting disruption to those specific enhancements. However, the enhancements often overwrite configuration data, adding functions, changing functions, deleting/replacing functions, etc. The disruption to the system caused by these activations cannot easily be assessed before installation, and there is no way currently to reverse the installation in a cost/time effective manner. Thus, example embodiments of the present invention relate to additional procedures, functions, and systems for facilitating a reversal of enhancement activations.

### Summary of the Invention

The invention provides for a system for managing configuration data enhancements, a computer-implemented method, and a computer-readabie storage medium in the indepdendent claims. Embodiments are given in the depdendent claims.

A business object as used herein encompasses an object oriented mode! of a real world objects. Real world objects, for example an employee or a sales order, may be modeled as business objects in business application systems,.

Business Objects may be used as "black boxes" that encapsulate data and processes, thus hiding the details of the structure and implementation of the underlying data.

In some embodiments, Business Objects are implemented as entities with multiple layers:
At the core of a Business Object is the kernel, which represents the object's inherent data.

The second layer, the integrity layer, represents the business logic of the object. It comprises the business rules and constraints that apply to the Business Object.

The third layer, the interface layer, describes the implementation and structure of the Business Object, and defines the object's interface to the outside world.

The fourth and outermost layer of a Business Object is the access layer, which defines the technologies that can be used to obtain external access to the object's data, for example COM/DCOM (Component Object Model/Distributed Component Object Model).

A 'switch' as used herein encompasses a software control that enables a business object to be enabled or disabled. For instance a switch could be an extry in a database table which is checked before a business object is executed or a method of a business object is called by a program or a query.

A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW,CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. References to a computer-readable storage medium should be interpreted as possibly being multiple computer-readable storage mediums. Various executable components of a program or programs may be stored in different locations. The computer-readable storage medium may for instance be multiple computer-readable storage medium within the same computer system. The computer-readable storage medium may also be computer-readab!e storage medium distributed amongst multiple computer systems or computing devices.

A 'processor' as used herein encompasses an electronic component which is able to execute a program or machine executable instruction. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. Many programs have their instructions performed by multiple processors that may be within the same computing device or which may even be distributed across multiple computing devices.

The present invention is defined by the independent claims.

This embodiment may have the advantage that is provides a means of preventing the delivery of a non commutative configure data for new functionality. This embodiment may further have the advantage that it provides a means to define a redefinition path in case the configuration of configuration replacement.

In another embodiment the electronic computer processor is further configured to modify the switch status table upon activation of a data enhancement selected from the data enhancements, wherein the switch status table is modified using predefined configuration logic descriptive of the interoperability of the data enhancement with each of the other data enhancements. The data enhancement may for instance be a business function. Various business functions may or may not be able to function for the active at the same time. A business function may be bundled with configuration logic which describes other business functions is able to operate. This predefined configuration logic may be a set up interdependencies which allow the system to properly set the switch status table to enable a business function to be active. This embodiment may be beneficial because it allows the activation of business functions in a reversible manner. For instance a database may also be maintained which contains data for reversing the activation of a business function.

### Brief Description Of The Drawings

In the following preferred embodiments of the invention will be described, by way of example only, and with reference to the drawings in which:
Figure 1 the relationship between different components of an example process, according to one example embodiment of the present invention,
Figure 2 illustrates an example process for data switching, according to one example embodiment of the present invention.
Figure 3 illustrates an example system, according to one example embodiment of the present invention, and
Figure 4 illustrates an appended database and the operation of a switch filter according to an embodiment of the invention.

### Detailed Description

Like numbered elements in these figures are either equivalent elements or perform the same function. Elements which have been discussed previously will not necessarily be discussed in later figures if the function is equivalent.

In a software suite that evolves with customer demand, an enhancement or update package strategy may be used. An update package may contain function coding that adds configuration data. Configuration data may be part of the technical system settings, e.g., key data that may be necessary for customization of user interfaces and business processes. Customizing may include a process to transform standard software to individual business processes. In a working system, an average 5% of data records may be configuration data, while the bulk of the data records may be transactional data. Example embodiments of the present invention describe a technique to handle configuration data in the enhancement package environment. It may be important in minimizing customer disruption, that the actual importing of configuration data via a system upgrade does not affect the customization processes. To ensure this behavior, new configuration data may be delivered in separate enhancement packs that may include separate configuration data sets. This additional data may put the producing effort in the configuration life cycle management on the customer side. However, the customer may not have mechanisms to detect data overlapping between his own configuration data and the data stored in the enhancement pack. When one or more enhancement packs are activated, they may harm, e.g., overwrite, the existing configuration data. Example embodiments of the present invention may avoid data conflicts between the
original configuration data and the new upgraded configuration data.

### Framework of Example Embodiments

The enhancement or update package design is a model for developing and shipping innovations. This model may include Stable Core Releases and innovation via enhancement packages, e.g., between the stable core releases. Instead of providing functional modification and additions via a series of major releases, a single release may be followed by a series of enhancement packages that are optional for the customer. Support packages for the stable core may be shipped in addition to enhancement packages, but may be strictly separated from the enhancement packages. Enhancement packages may be based on a particular stable core release, and may be dependent on that release, such that customers may have to install that stable core in order to activate the associated enhancement package. This model may make innovations accessible to customers more quickly while minimizing the risk of affecting existing functionality used by the customer. The customer may now be able to benefit from new functionality without being forced to apply a release update. In addition, the customers may be able to select only those new functions that are required for their business.

Preferably, interoperability between the applications should not be affected by the activation (e.g., switching on) of business functions . The activation (switching on) of a business function should not affect existing business processes, e.g., processes should not become inconsistent. It may be that the switching on of business functions will change business processes in a way that they will offer more functionality. Switching on of a business function should not depend on the status of business functions in other systems. It may be a goal to offer all cross system process enhancements in this way, e.g., downward compatible. For example, there may be two application systems A and B, and there may be a cross-systems business process in place which affects system A and system B. Further, the example may have additional BF1 and BF2, which may influence this business process. In this case, stable core guarantees may dictate that installation in one system, or at least the dominate system may not require instillation in the other system, or at least the dependent system.

The business functions may serve as the core of business processes, with business functions of enhancement packs allowing customers to enhance business processes. In order to achieve the flexibility benefits this model provides, certain requirement may be imposed. For example, stable core functions may be required to function without issue, and enhancement functions associated with the stable core, may be required to cause no disruption upon installation, but prior to activation. Test cases may be assigned to a business function. For example, test cases for compatibility and for correctness of the business functions may be assigned to each business function. Compatibility tests may ensure that new enhancement package versions of software components work with the stable core version of other software components. Test cases for business functions may ensure both that the deactivated functions do not affect the existing system and that the new functionality works correctly when the switches are activated. A business function should not only work from a business point of view but also from a technology point of view. A business function may have one or more prerequisite dependencies, such as BF1 defines BF2 as prerequisite. BF1 may include one or more switches of BF2 in order to reuse technical elements. There may also be cases where business functions are mutually exclusive. In other words, a first business function may be prohibited from activation if a second business function is already active and vice versa. This could also be mapped in the system through a so called conflict dependency. in customer test environments business functions may be reversible after having evaluated the new functionality and estimated the implementation effort required of the installation or activation. This reversibility may be provided by implementation of one or more example embodiments of the present invention, described herein.

In order to make the business functions of enhancement packs optional, switches may be used. The switches may be assigned to business functions and may only be activated via the business function. A switch may always be imported as inactive in the customer system. If a switch at the customer system is already active and it is again imported via transports, then the active state may be unaffected. Switches may be provided in a switch framework for activating business functions, to analyze activation logs and the history of activations, and start the transport process from a test system to the productive system. Configuration content to introduce new functionality may be part of an enhancement package, and may be assigned to a switch, which is assigned to a business function. Configuration content may be installed as a plurality of table entries in a database table. Each table entry may get an assignment to a switch, and each switch may be a grouping of configuration table entries related to a business function.

### Example Embodiments

Example embodiments of the present invention may move the update configuration data from separate enhancement package datasets, to the central configuration dataset. This may provide several benefits. First, transparency may be increased because it may avoid different data storages for configuration data (e.g., the original dataset and each enhancement pack). It may increase robustness and simplify the implementing of new predefined business functionality, It may allow for the deactivation of preconfigured business functionality in the testing phase. It may reduce the complexity by forgoing the separate configuration sets. Finally, it may reduce the total cost of ownership for managing the configuration data life cycle in the enhancement pack environment. Example embodiments for accomplishing one or more of these benefits are described below, but generally include the use of system switches to provide activation switching of enhancement functions at the specific content level, e.g., at the data record level.

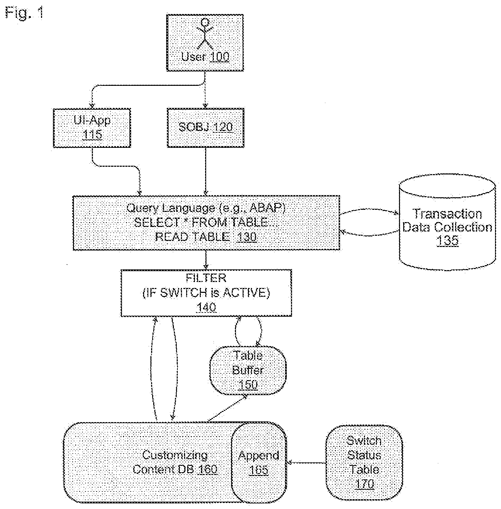

Example embodiments of the present invention include systems and methods that may facilitate the direct switching of content, specifically, configuration data of a configuration database. Figure 1 illustrates one example embodiment of a database system. There may be a user 100 who interacts with the system, e.g., a customized business software suite executed by one or more computer systems. The user may access a user interface application 115. Further, user 100 may have a design environment SOBJ 120. SOBJ may be a tool and technique provided by the developer to support all customizing design time actions. The generic design time framework for maintaining customizing data may be enhanced by example embodiments of the present invention.

As was described above, example systems may include a customizing content database (e.g., 160) that defines certain variables, functions, parameters, and configurations of the software suite, to provide a unique solution for this particular customer (e.g., a company user 100 works for). The overall customizing content database 160 may contain all of the configuration data from the developer, partners, and the end-user customer, including both the productive configuration data and the configuration data not activated (e.g., not yet activated, or deactivated). This may include the enhancement pack data in the configuration database, which may make separate enhancement pack databases superfluous. Via the interface application 115, the user 100 may access one or more databases that define the transactional data of the system, e.g., transaction data collection 135. This data may be the various data records the software suite stores and manipulates as part of ist functioning, e.g., stored email, customer records, invoices, projects, task lists, etc.

The example database system of Fig. 1 may include a query language and a query interface 130. Any query language is possible, such as ABAP, mySQL, or any number of other proprietary or public query languages used to create, manipulate, and maintain databases. In addition to transaction data, e.g. 135, the actual functions of the software suite may be stored in a database. Calling a function within the software may include querying that function, along with any custom configurations stored in the customizing content database 160. The system may also include a table buffer 150 to cache and quickly call common functions, The example system may also include a switch status table 170, as part of the switch framework. One tool
of the software suite may be a system switch, or an internal data structure used to designate certain data records (e.g., an enhancement function) as active or inactive. Subsequent to the initial deployment, an enhancement package may have been delivered and installed, but not activated. Once the customer, e.g., user 100, activates one or more enhancement functions, those functions may be installed in the customizing content database 160, along side the old functions, even those functions the enhancements are meant to overwrite or modify. Additionally, records in the customizing database 160 may have an added attribute of a switch ID. Alternatively, only the enhancement functions may have this added attribute. Append 165 may include the new switch ID record field and contain a unique switch ID generated by the switching framework. The status of those various switches (e.g., as labeled by the various switch IDs) may be maintained in the switch status table 170.

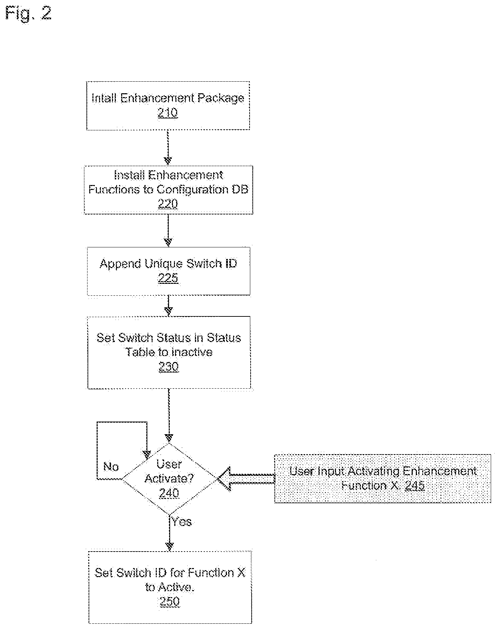

Figure 2 illustrates one example procedure, according to one example embodiment of the present invention. For example, at 210, the software suite may receive an enhancement package, including one or more enhancement functions. At 220, the enhancement functions may be installed in the configuration DB, e.g., 160. The example procedure may then append a switch field to each of the enhancement functions and provide them with a unique switch ID, e.g., at 225. The unique switch ID may also be registered in the switch status table and set to inactive, e.g. at 230. Then, at 240, the example procedure may wait for one of these enhancement functions to be activated by the user. During this period, the system may operate normally, as if there were no enhancement functions installed, and wait for user input indicating a desire to activate one or more of the functions. When the example procedure receives user input (e.g., 245) indicating that one or more functions should be activated, the example procedure may then (e.g., at 250) set the switch ID entry in the switch status table for function X to "active."

When a switch status is active, the query language module (e.g., 130) and the switch filter (e.g., 140) may forward function calls to the enhancement function. In one example embodiment, a delivered or an old customizing table record (e.g., an original function, core function, or function other than an enhancement function) may have no assignment to a switch ID. In that case the entry is active by default. Examples of the switch framework may include a tool that provides the technical prerequisites to control which functions are made visible, e.g., via system switches, the status table, and/or query filter. The switch framework may be added to the system as part of the example embodiments, or may already exist, being used to switch other features within the software suite. The switch framework may be used to activate, for example, enhancement objects, interface elements, or customizing layers.

The filter function may then return results based on the switch status table. For example, table 1 below may have keys 1 to 4 and may have values A to D. There may also be a first Switch SW1 and a second switch SW2 (for example, SW1 may be associated with key 2, and SW2 may be associated with key 3). A business function of an enhancement pack may be associated with SW1, and once a user activates that business function, the switch status table may include SW1 = active, SW2 = inactive. The filter may then modify results based on the switch status. For example an SQL SELECT command may return the associated values for keys 1 and 4, since those keys have not been associated with a switch. Further, for keys 2 and 3 the filter will automatically return results based on switch status. Thus, a read command (e.g., SELECT) for key 2 may also return a result after confirming that SW1 has an active status.. A select command for key 3 may return an error, or a "no data" result, since the associated key is inactive.

In some cases new table content in a new enhancement pack may overwrite an existing table entry. The example configuration data tables may not be like the transactional data tables. Transactional data tables may experience high turnover, e.g., frequent modification. The configuration data tables include records that may define interfaces and provide functions,

**Table 1 :**

| Key | Value | Switch |
|---|---|---|
| 1 | A | |
| 2 | B | SW1 |
| 3 | C | SW2 |
| 4 | D | |

**Table 2:**

| Switch ID | Status |
|---|---|
| SW1 | Active |
| SW2 | Not Active |

enhancement packs may add to these tables, but it may be rare that they modify existing entries with new values. When such modification or overwriting is required, also referred to as redefinition, it may require a separate database, so as to remain reversible. Referring to the example tables above, a new business function BF3 may be added, and may be associated with switch ID SW3. This business function and associated switch may include a new table key 2, e.g., "b." In this case of redefinition of a table entry, the successor table entry may be delivered in a specific database table. This database table may contain all redefinitions, e.g., tables, keys, and attributes. After activation of BF3 the redefinition may take place and overwrite in table 1, for key 2, the new value 'b'. To reverse this operation, a user may deactivate SW3 and ensure SW1 is active. This ability may be confined to a testing environment, since any transactional data created by the overwrite (e.g., "b" of SW3) may be rendered inaccurate by the reversal back to a function "B" of SW1.

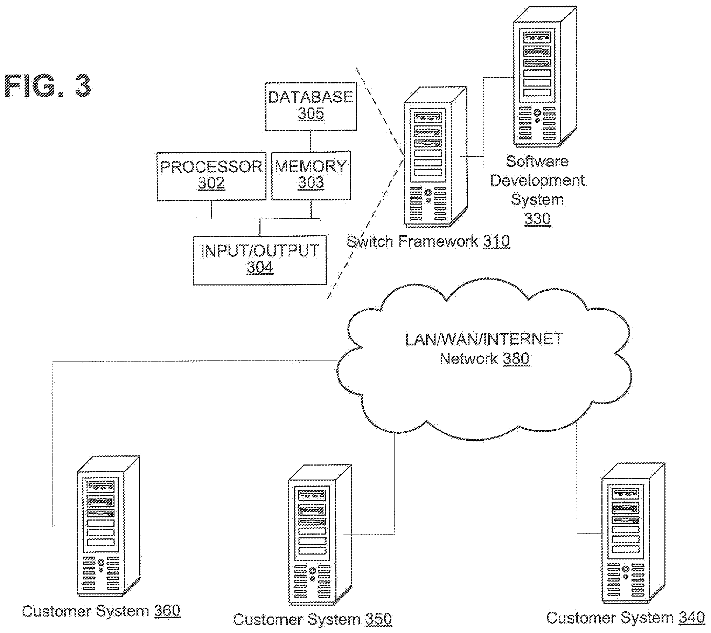

Figure 3 illustrates one example system, according to an example embodiment of the present invention. The example may include one or more server computer systems, e.g., switch framework 310. This may be one server, a set of local servers, or a set of geographically diverse servers. Each server may include an electronic computer processor 302, one or more sets of memory 303, including database repositories 305, and various input and output devices 304. These too may be local or distributed to several computers and/or locations. Any suitable technology may be used to implement embodiments of the present invention, such as general purpose computers. There may be a software development system 330, which may be on a different server, or run on the same server as the function consolidation engine.

These system servers may be connected to one of more customer system 340 to 360 via a network 380, e.g., the Internet. One or more system servers may operate hardware and/or software modules to facilitate the inventive processes and procedures of the present application, and constitute one or more example embodiments of the present invention. Further, one or more servers may include a computer readable medium, e.g., memory 303, with instructions to cause a processor, e.g., processor 302, to execute a set of steps according to one or more example embodiments of the present invention.

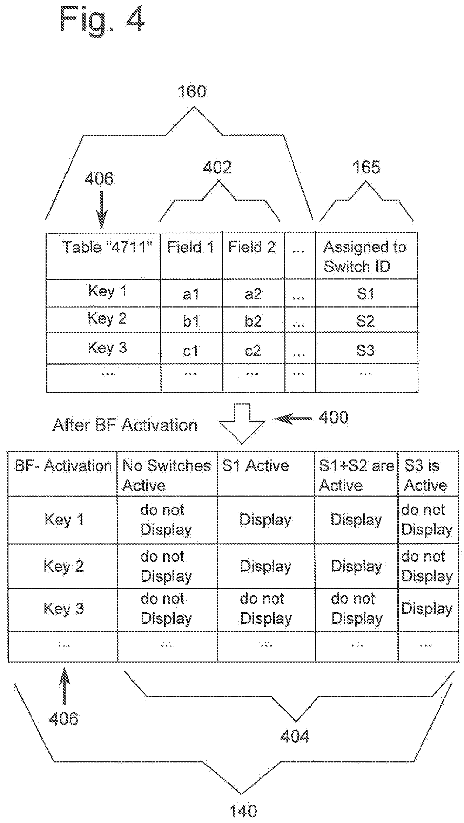

Figure 4 shows an example of a customizing content database 160 and a table illustrating the actions taken by a filter 140. The customizing content database 160 has the switch IDs 165 appended to it in a separate column in the table. Arrow 400 represents the activation of a data enhancement for a business function activation, The table 140 shows the results of a filter using a switch status table 170. The system shown in figure 1 is operated by user 100 who provides input to a user interface application 115 four and SOBJ 120. VOBJ 120 is a tool for customizing design time activities. Both the user interface application 115 and SOBJ 120 are able to send queries to a query language and query interface 130.

Queries may be collected in a transaction data collection database 135. When a query is made for a business function the query language and query interface first passes the request to a switch filter 140. For commonly called functions the switch filter retrieves the business function from table buffer 150. To call a business function the filter first checks the customizing content database 160. The customizing content database 160 has been appended with an extra column 165 which contains a switch ID assigned to each business function. The filter 170 checks to see if a switch is in an active state or not. If the switch is in an active state the configuration data is returned. If the switch is not in an active state then there's either no result or an error is returned.

Table 140 shown in figure 4 shows an example of run time dependent configuration data 404. Each of the database keys 406 shown in 160 and 140 represent business functions. The field columns 402 represent configuration data. The columns in 140 show the filter result when a particular key is referenced in the database with respect to the various switches. Key 1 is associated with S1 or switch one. When switch was active Key 1 is always able to be displayed. Key 2 is associated with S2 and Key 3 is associated with S3. Some of the interdependencies associated with the business functions represented by Key 1, Key 2, and Key 3 are shown in this table. For instance Key 1 is not displayed if S3 is active. If the business function assocaited with Key 3 were activated then S1 would be set to inactive.

When a business function is activated, predefined logic is used to modify the switch status table 170. Business fuctions which are incompatible with the business function that was just activated are switched off. During operation of the system a business function may be called or queried in order to execute one or more methods or functions of the business function. The Query gererated by the query interface 130 is then passed to the filter 140 which first checks the database 160 for the appended switch ID 165. The switch status table 170 is then used to indicate if a particular switch is active or not. If the switch is active then the business function is allowed to be called. If not either no action is performed or an error message is generated.

In an enhancement mode, software for an Enterprise Resource Planning (ERP), Customer Ralationship Management (CRM), Supplier Relationship Managment (SRM) system, Supply Chain Management (SCM) system is delivered and enhancements may be activate for productive usage. The enhancements may provide a means to enhance functionality in a testable and controlled way based on Business Functions (BF) and Switches (SW). Switches may be used to enable or disable a business function. The Switch may be technical entity a method of an object or variable in a table, the BF may be a collector of switches plus customer friendly test cases and documentations. BFs organized in an Enhancement Framework for simple feature extensions to new complex functionality.. Enhancements in this theme seek to simplify a complex User Interface (UI) by bringing together common screens and reducing the overall number of clicks per transaction. This may be done using Enhancment Packages (EHP). Key processes slated for improvements include order to cash (EHP 2), procure to pay (EHP 3), attract to perform (EHP 4), and accounting to reporting (EHP 5). Other usability improvements include role-based access and more stable Web DynPro usability enhancements.

Cross-industry (horizontal) functional enhancements. These themes represent horizontal capabilities across industries and processes. One example of new functionality is the newly enhanced closing cockpit, which provides automation and collaboration for financial closes. The controller monitor and control is provided - including process execution (i.e., central process scheduler) and task execution via the portal with subunit accountants.

Another example of new functionality that falls under this theme is the delivery of talent management across several enhancement packages. Industry-specific enhancements. Industry-specific themes deliver vertical-specific functionality. In EHP 3, some examples include catch weight management in inventory accounting for consumer products, electronic book integration for transportation, and technical integration between IS Oil and IS Utilities (ISU).

Each EHP may deliver additional enterprise services via service definitions or from partners.

An may EHP contains one or more Business Functions (BF) a BF may be activated by a operator. That means a EHP delivery without BF activation does not need to affect the software being run.

Embodiments of the invention may be useful for enhancing the specific configuration aspect for several enhancement techniques. An update enhancement package contains coding artefact and configuration data. Configuration data is a part of technical system settings, key data, which are necessary for customization of User Interfaces and business processes. Customizing is the process to transform standard software to individual business processes. In a productive system, in average 5% of data records have the character of configuration data, The patent dedicates a technique to handle configuration data in the enhancement environment

Embodiments of the invention may also have the benefit that customers customization processes are not necessarily affected by the importing of configuration data during a system upgrade. To ensuring this behavior, new configuration data may be delivered in separate Business Configuration stores. This addition data stores producing effort for customer in his configuration life cycle management. A Customer may have no mechanism to detect data overlapping between his own configuration data and the data, stored in a Configuration-Sets, A Configuration-Set may, for intance be, a data base or file containing configuration settings. Although it may be possible to detect data overlapping manually, this may require such a large number of man hours that it is not feasible to peform.

In case of activation a Configuration-Set, the Configuration-Set data can harm, overwrite, the existing configuration data. Embodiments of the invention may avoid data conflicts between the given configuration and the new upgraded configuration data from a EHP delivery. In some embodiments, the data confiitct may be avoided by:
- increasing transparency because of avoiding different data storages for configuration data, reduce the complexity for maintenance the configuration data life cycle because of abstain of separate configuration-Sets.
- increasing robustness and simplify implementing of new predefined business functionality
- allowing the deactivation of preconfigured business functionality in the testing phase. This feature enables a BF to be reverted or disabled..

A switch table is a table which contains the status of a switch. In general the assigned BF is on or off. If BF has status on than al related switches are active. This status is stored in the switch status table.

### Example Customizing table 'logistics plants'

**Table 3:**

| Table-key | Name 1 |
|---|---|
| 0001 | Plant Berlin |
| 0002 | B |

Table 3 shows an example of a customizing table for a 'logistics plant'

**Table 4:**

| Switch-ID |
|---|
| S1 |

The Table-key entry 0001 of Table 3 is assigned to the switch ID shown in Table 4.

**Table 5:**

| Switch | State |
|---|---|
| S1 | Active |
| S2 | Not Active |

The Switch-ID SW1 is then used to control Switch S1 as shown in Table 5.

A delivered or an old customizing table entry has no assignment to a switch id. In that case the switch is active. The enhancement of the design time framework causing the assignment to the switch id. Switch framework is a tool that provides the technical prerequisites to control which functions are made visible. You can use the Switch Framework to activate, for example, enhancement objects, interface elements, or Customizing layers.

Embodiments of the invention may enable to revert the functionality enabled by a Business Function. If a new configuration is used, it may not be possible to revert the funcationality because the previous configuration was overwritten.

This difficulty can be resolved by using a specific algorithm. Following the assumption that old and new configuration data shall be commutative deployable, the algorithm checks data commutatively. In case of an conflict the redefinition takes place to define the role of data replacement.

### For example if the original configuration is 'B' and the new is 'b,'

the redefinition of attribute 'B' by 'b' is a new assignment to new configuration data 'b'. The redefinition role is preconfigured, Customer has no additional effort.

This can be illustrated by the following example, Table 6 is a redefinition of table 3. 'B' Redefines 'b'.

**Table 6:**

| Table-key | Name 1 |
|---|---|
| 0001 | Plant Berlin |
| 0002 | B |

**Table 7:**

| Switch-ID |
|---|
| S1 |
| S2 |

Table 7 is created by adding an additional Switch ID to table 4.

**Table 8:**

| Switch | State |
|---|---|
| S1 | Active |
| S2 | Active |

The Switch IDs of table 7 have the following assignments in table 8.

In some instances a redefinition table may be used to detect datat overlapping between the orginal configuration data and configutation data provided by an enhancement pack.

For example, in some cases new table content in a new EHP version may overwrite an existing table entry. For example a new or changed Human Resources (HR) law may be introduced in the system via a new BF.
In the previous example: Table Key '0002' is delivered and has the Attribute 'B', later on a new enhancement package comes in the system with a new BF2 and Switch-ID SW2. SW2 has a table entry for 'Tab1' that redefined the delivered table entry B with value b. In case of redefinition of a table entry the successor table entry will be delivered in a specific database table. This database table is containing all redefinition tables with table keys and attributes. After activation of BF2 the redefinition takes place and overwrites in table 'Tab1' the key '0002' with the new value 'b'.

**Table 9 (Redefinition Table):**

| Predecessor | Successor | Switch Assignment |
|---|---|---|
| Tab1\|002\|B | Tab1\|002\|P | S2 |
| Tab1\|002\|b | Tab1\|002\|bb | S3 |
| Tab2\|xyz\|... | Tab2\|xyz\|new | S4 |

Results of the SELECT from table 'Tab1' WHERE key = '0002' -> varying the status of S1, S2
a. S1 and S2 are not active, system message SY-SUBRC - 4, no data result
b. S1 is active S2 not active, system message SY-SUBRC = 4, no data result.
c. S2 is active, system message SY-SUBRC = 0, Result is 'b'.
d. Revert BF2 -> S2
   1. S2 is not active
   2. Revert replaces 'b' by 'B'; System message for SELECT above is SY-SUBRC = 0, Result is 'B'.
e. If BF3 is delivered with assignment to S3 and customer activate BF3: S3 is active, system message SY-SUBRC = 0, Result is 'bb'.
f. Undo BF3/S3: BF1/S1 and BF2/S2 are active -> system message SY-SUBRC = 0, Result is 'b'.
g. Undo (BF3/S3 and BF2/S2): BF1/S1 is active anymore -> system message SY-SUBRC = 0_{;} Result is 'B'.
h. Undo (BF3/S3 and BF1/S1): BF2/S2 is active anymore -> system message SY-SUBRC = 0, Result is 'b',
i. Undo (BF3/S3+BF2/S2+BF1/S1) -> system message SY-SUBRC = 4, no data result

The system message SY-SUBRC is an Advanced Business Application Programmin (ABAP) language Example. Value 0 means the request result is positive, value 4 means the request result is negative.

Example embodiments of the present invention may move the update configuration data from separate enhancement package datasets, to the central configuration dataset. This may provide several benefits. First, transparency may be increased because it may avoid different data storages for configuration data (e.g., the original dataset and each enhancement pack). It may increase robustness and simplify the implementing of new predefined business functionality.

It should be understood that there exist implementations of other variations and modifications of the invention and its various aspects, as may be readily apparent to those of ordinary skill in the art. Features and embodiments described above may be combined.

## Claims

1. A system (310) for avoiding conflicts between original configuration data and new configuration data of Business Functions delivered in an enhancement package, wherein Business Functions are core units of functionality of a software suite that can be activated or deactivated by a user and the configuration data is data that modifies functionality of the software suite by defining variables, functions, parameters, and configuration of the software suite, wherein the system comprises: an electronic computer processor in communication with an electronic database configured to:
maintain a content database table (160) associating configuration data entities (402) to each of the Business Functions,
by appending (225) to the content database table a switch ID (165) for each Business Function (406) of the delivered enhancement package; maintain a switch status table (170), by assigning, each switch ID to a switch status entry, wherein the switch status entry of the switch ID of each Business Function of the delivered enhancement package is set to inactive; and a query filter (140) configured to:
receive a request for a first Business Function;
check a first switch status, in the switch status table, for the switch ID of the first Business Function, wherein the first Business Function has first configuration data in the content database table;
if the first switch status is an active state, return the first configuration data and allow the first Business Function to be called to execute one or more methods of the first Business Function;
if the first switch status is an inactive state, return one of: a no data result and an error; wherein the electronic computer processor is further configured to modify the switch status table upon activation (400) of the first Business Function by a user, wherein the switch status table is modified to switch off the Business Functions determined as incompatible with the first Business Function when their configuration data are not commutative deployable.

2. The system of claim 1, wherein the associate and the assign are each conditioned on specific user activation input.

3. The system of any one of the preceding claims, further comprising:
a table buffer (150) for storing results from the query filter.

4. The system of any one of the preceding claims, wherein a plurality of configuration data entries share a single switch.

5. The system of any one of the preceding claims, further comprising:
a user management interface configured to provide at least the following functions:
assigning a switch ID to one or more configuration entities;
activate a switch status; and
deactivate the switch status.

6. A computer-implemented method for avoiding conflicts between original configuration data and new configuration data of Business Functions delivered in an enhancement package, wherein Business Functions are core units of functionality of a software suite that can be activated or deactivated by a user and and the configuration data is data that modifies functionality of the software suite by defining variables, functions, parameters, and configuration of the software suite, the method comprising:
maintaining, by an electronic processor, a content database table (160) associating configuration data entities (402) to each of the Business Functions;
by appending (225) to the content database table a switch ID (165) for each Business Function (406) of the delivered enhancement package maintaining, with the electronic processor, a switch status table (170), by assigning each switch ID to a switch status entry, wherein the switch status entry of the switch ID of each Business Function of the delivered enhancement package is set to inactive; and
filtering, with a query filter (140), query requests, including:
receiving a request for a first Business Function, wherein the first Business Function has first configuration data in the content database table;
checking a first switch status, in the switch status table, for a switch ID of the first Business Function;
if the first switch status is an active state, returning the first configuration data and allowing the first Business Function to be called to execute one or more methods of the first Business Function;
if the first switch status is an inactive state, return one of: a no data result and an error, wherein the method further comprises modifing the switch status table upon activation (400) of the first Business Function by a user, wherein the switch status table is modified to switch off the Business Functions determined as incompatible with the first Business Function when their configuration data are not commutative deployable.

7. The computer-implemented method of claim 6, wherein the associating and the assigning are each conditioned on specific user activation input.

8. The computer-implemented method of claim 6 or 7, further comprising: storing results from the filtering in a table buffer.

9. The computer-implemented method of any one of claims 6 to 8, further comprising:
providing a user management interface with the electronic processor, including at least the following functions:
assigning a switch ID to one or more configuration records;
activating a switch status; and
deactivating the switch status.

10. A computer-readable storage medium comprising instructions that, when executed by an electronic processor, cause a system to implement the method of any of claims 6 to 9.

## Patentansprüche

1. System (310) zur Vermeidung von Konflikten zwischen ursprünglichen Konfigurationsdaten und neuen Konfigurationsdaten von in einem Erweiterungspaket gelieferten Business Functions, wobei Business Functions Funktionalitätskerneinheiten eines Softwarepakets sind, die von einem Benutzer aktiviert oder deaktiviert werden können, und die Konfigurationsdaten Daten sind, die Funktionalität des Softwarepakets durch Definieren von Variablen, Funktionen, Parametern und der Konfiguration des Softwarepakets modifizieren, wobei das System Folgendes aufweist:
einen elektronischen Computerprozessor, der mit einer elektronischen Datenbank in Kommunikation ist, konfiguriert zum:
Pflegen einer Inhaltsdatenbanktabelle (160), die Konfigurationsdateneinheiten (402) jeder der Business Functions zuordnet, durch Anfügen (225) einer Schalterkennung (165) für jede Business Function (406) des gelieferten Erweiterungspakets an die Inhaltsdatenbanktabelle,
Pflegen einer Schalterstatustabelle (170) durch Zuweisen eines Schalterstatuseintrags zu jedem Schalter, wobei der Schalterstatuseintrag der Schalterkennung jeder Business Function des gelieferten Erweiterungspakets auf inaktiv gesetzt ist,
und einen Abfragefilter (140), konfiguriert zum:
Empfangen einer Anforderung für eine erste Business Function;
Überprüfen eines ersten Schalterstatus in der Schalterstatustabelle auf die Schalterkennung der ersten Business Function, wobei die erste Business Function erste Konfigurationsdaten in der Inhaltsdatenbanktabelle hat;
falls der erste Schalterstatus ein aktiver Zustand ist, Zurücksenden der ersten Konfigurationsdaten und Zulassen, dass die erste Business Function aufgerufen wird, um ein oder mehr Verfahren der ersten Business Function auszuführen;
falls der erste Schalterstatus in einem inaktiven Zustand ist, Zurücksenden eines der Folgenden: ein Keine-Daten-Ergebnis und einen Fehler;
wobei der elektronische Computerprozessor ferner zum Modifizieren der Schalterstatustabelle bei Aktivierung (400) der ersten Business Function durch einen Benutzer konfiguriert ist, wobei die Schalterstatustabelle zum Ausschalten derjenigen Business Functions modifiziert wird, die als mit der ersten Business Function nicht kompatibel bestimmt werden, wenn ihre Konfigurationsdaten nicht kommutativ einsetzbar sind.

2. System nach Anspruch 1, wobei das Assoziieren und das Zuordnen jeweils durch eine spezifische Benutzeraktivierungseingabe bedingt sind.

3. System nach einem der vorhergehenden Ansprüche, das ferner Folgendes aufweist:
einen Tabellenzwischenspeicher (150) zum Speichern von Ergebnissen aus dem Abfragefilter.

4. System nach einem der vorhergehenden Ansprüche, wobei mehrere Konfigurationsdateneinträge einen einzelnen Schalter gemeinsam nutzen.

5. System nach einem der vorhergehenden Ansprüche, das ferner Folgendes aufweist:
eine Benutzermanagementschnittstelle, die zum Bereitstellen wenigsten der folgenden Funktionen konfiguriert ist:
Zuweisen einer Schalterkennung zu einer oder mehr Konfigurationseinheiten;
Aktivieren eines Schalterstatus; und
Deaktivieren des Schalterstatus.

6. Computerimplementiertes Verfahren zur Vermeidung von Konflikten zwischen ursprünglichen Konfigurationsdaten und neuen Konfigurationsdaten von in einem Erweiterungspaket gelieferten Business Functions, wobei Business Functions Funktionalitätskerneinheiten eines Softwarepakets sind, die von einem Benutzer aktiviert oder deaktiviert werden können, und die Konfigurationsdaten Daten sind, die Funktionalität des Softwarepakets durch Definieren von Variablen, Funktionen, Parametern und der Konfiguration des Softwarepakets modifizieren, wobei das Verfahren Folgendes aufweist:
durch einen elektronischen Prozessor Pflegen einer Inhaltsdatenbanktabelle (160), die Konfigurationsdateneinheiten (402) jeder der Business Functions zuordnet; durch Anfügen (225) einer Schalterkennung (165) für jede Business Function (406) des gelieferten Erweiterungspakets an die Inhaltsdatenbanktabelle,
mit dem elektronischen Prozessor Pflegen einer Schalterstatustabelle (170) durch Zuweisen eines Schalterstatuseintrags zu jedem Schalter, wobei der Schalterstatuseintrag der Schalterkennung jeder Business Function des gelieferten Erweiterungspakets auf inaktiv gesetzt ist, und
mit einem Abfragefilter (140) Filtern von Abfrageanforderungen einschließlich:
Empfangen einer Anforderung für eine erste Business Function, wobei die erste Business Function in der Inhaltsdatenbanktabelle erste Konfigurationsdaten hat;
Überprüfen eines ersten Schalterstatus in der Schalterstatustabelle auf eine Schalterkennung der ersten Business Function,
falls der erste Schalterstatus ein aktiver Zustand ist, Zurücksenden der ersten Konfigurationsdaten und Zulassen, dass die erste Business Function aufgerufen wird, um ein oder mehr Verfahren der ersten Business Function auszuführen;
falls der erste Schalterstatus in einem inaktiven Zustand ist, Zurücksenden eines der Folgenden: ein Keine-Daten-Ergebnis und einen Fehler; wobei das Verfahren ferner das Modifizieren der Schalterstatustabelle bei Aktivierung (400) der ersten Business Function durch einen Benutzer aufweist, wobei die Schalterstatustabelle zum Ausschalten derjenigen Business Functions modifiziert wird, die als mit der ersten Business Function nicht kompatibel bestimmt werden, wenn ihre Konfigurationsdaten nicht kommutativ einsetzbar sind.

7. Computerimplementiertes Verfahren nach Anspruch 6, wobei das Zuordnen und das Zuweisen jeweils durch spezifische Benutzeraktivierungseingaben bedingt sind.

8. Computerimplementiertes Verfahren nach Anspruch 6 oder 7, das ferner Folgendes aufweist: Speichern von Ergebnissen aus der Filterung in einem Tabellenzwischenspeicher.

9. Computerimplementiertes Verfahren nach einem der Ansprüche 6 bis 8, das ferner Folgendes aufweist:
Bereitstellen einer Benutzermanagementschnittstelle mit dem elektronischen Prozessor, die wenigstens die folgenden Funktionen hat:
Zuweisen einer Schalterkennung zu ein oder mehr Konfigurationsdatensätzen;
Aktivieren eines Schalterstatus; und
Deaktivieren des Schalterstatus.

10. Computerlesbares Speichermedium, das Anweisungen aufweist, die bei Ausführung durch einen elektronischen Prozessor ein System zum Implementieren des Verfahrens nach einem der Ansprüche 6 bis 9 veranlassen.

## Revendications

1. Système (310) permettant d'éviter des conflits entre des données de configuration d'origine et des nouvelles données de configuration de fonctions métier livrées dans un package d'amélioration, où les fonctions métier sont des unités de base de fonctionnalité d'une suite logicielle qui peuvent être activées ou désactivées par un utilisateur et la donnée de configuration est une donnée qui modifie une fonctionnalité de la suite logicielle en définissant des variables, des fonctions, des paramètres, et une configuration de la suite logicielle, où le système comprend :
un processeur informatique électronique en communication avec une base de données électronique configurée pour :
entretenir un tableau de base de données de contenu (160) associant des entités de données de configuration (402) à chacune des fonctions métier,
en annexant (225) au tableau de base de données de contenu un identifiant ID de commutateur (165) pour chaque fonction métier (406) du package d'amélioration livré ;
entretenir un tableau d'état de commutateur (170) en affectant chaque ID de commutateur à une entrée d'état de commutateur, où l'entrée d'état de commutateur de l'ID de commutateur de chaque fonction métier du package d'amélioration livré est réglé sur inactif ; et un filtre de requête (140 configuré pour :
recevoir une demande pour une première fonction métier ;
vérifier un premier état de commutateur, dans le tableau d'état de commutateur, pour l'ID de commutateur de la première fonction métier, où la première fonction métier a des premières données de configuration dans le tableau de base de données de contenu ;
si le premier état de commutateur est un état actif, retourner la première donnée de configuration et permettre à la première fonction métier d'être appelée pour exécuter un ou plusieurs procédés de la première fonction métier ;
si le premier état de commutateur est un état inactif, retourner un résultat parmi :
aucun résultat de donnée et erreur ; où le processeur informatique électronique est en outre configuré pour modifier le tableau d'état de commutateur lors de l'activation (400) de la première fonction métier par un utilisateur, où
le tableau d'état de commutateur est modifié pour couper le commutateur des fonctions métier déterminées comme incompatibles avec la première fonction métier lorsque leurs données de configuration ne peuvent pas être déployées de manière communicative.

2. Système selon la revendication 1, dans lequel l'associé et l'affecté sont chacun conditionnés sur une entrée d'activation spécifique à un utilisateur.

3. Système selon l'une quelconque des revendications précédentes, comprenant en outre :
un tampon de tableau (150) pour stocker des résultats depuis le filtre de requête.

4. Système selon l'une quelconque des revendications précédentes, dans lequel une pluralité d'entrées de données de configuration partagent un seul commutateur.

5. Système selon l'une quelconque des revendications précédentes, comprenant en outre :
une interface de gestion d'utilisateur configurée pour fournir au moins les fonctions suivantes :
l'affectation d'un ID de commutateur à une ou plusieurs entités de configuration ;
l'activation d'un état de commutateur ; et
la désactivation de l'état de commutateur.

6. Procédé mis en œuvre par ordinateur permettant d'éviter des conflits entre des données de configuration d'origine et des nouvelles données de configuration de fonctions métier livrées dans un package d'amélioration, où les fonctions métier sont des unités de base de fonctionnalité d'une suite logicielle qui peuvent être activées ou désactivées par un utilisateur et la donnée de configuration est une donnée qui modifie une fonctionnalité de la suite logicielle en définissant des variables, des fonctions, des paramètres, et une configuration de la suite logicielle, le procédé comprenant :
l'entretien, par un processeur électronique, d'un tableau de base de données de contenu (160) associant des entités de données de configuration (402) à chacune des fonctions métier ;
en annexant (225) au tableau de base de données de contenu un ID de commutateur (165) pour chaque fonction métier (406) du package d'amélioration délivré,
l'entretien, avec le processeur électronique, d'un tableau d'état de commutateur (170) en affectant chaque ID de commutateur à une entrée d'état de commutateur, où l'entrée d'état de commutateur de l'ID de commutateur de chaque fonction métier du package d'amélioration livré est réglé sur inactif ; et
le filtrage, avec un filtre de requête (140), de demandes de requêtes, comportant :
la réception d'une requête pour une première fonction métier, où la première fonction métier a une première donnée de configuration dans le tableau de base de données de contenu ;
la vérification d'un premier état de commutateur dans le tableau d'état de commutateur, pour un ID de commutateur de la première fonction métier ;
si le premier état de commutateur est un état actif, le retour de la première donnée de configuration et le fait de permettre à la première fonction métier d'être appelée pour exécuter un ou plusieurs procédés de la première fonction métier ;
si le premier état de commutateur est un état inactif, le retour d'un résultat parmi : aucun résultat de donnée et erreur, où le procédé comprend en outre une modification du tableau d'état de commutateur lors d'une activation (400) de la première fonction métier par un utilisateur, où le tableau d'état de commutateur est modifié pour couper la commutation des fonctions métier déterminées comme incompatibles avec la première fonction métier lorsque leurs données de configuration ne peuvent pas être déployées de manière communicative.

7. Procédé mis en œuvre par ordinateur selon la revendication 6, dans lequel l'association et l'affectation sont chacune conditionnées sur une entrée d'activation spécifique à un utilisateur.

8. Procédé mis en œuvre par ordinateur selon la revendication 6 ou la revendication 7, comprenant en outre : le stockage de résultats provenant du filtrage dans un tampon de tableau.

9. Procédé mis en œuvre par ordinateur selon l'une quelconque des revendications 6 à 8, comprenant en outre :
la fourniture d'une interface de gestion d'utilisateur avec le processeur électronique, comportant au moins les fonctions suivantes :
l'affectation d'un ID de commutateur à un ou plusieurs enregistrements de configuration ;
l'activation d'un état de commutateur ; et
la désactivation de l'état de commutateur.

10. Support de stockage lisible par ordinateur comprenant des instructions qui, lorsqu'elles sont exécutées par un processeur électronique, font en sorte qu'un système mette en œuvre le procédé selon l'une quelconque des revendications 6 à 9.
